# EUROPEAN PATENT SPECIFICATION

(11) **EP 2 479 093 B1**
(45) Date of publication and mention of the grant of the patent: **06.01.2016**
(21) Application number: 09849473.5
(22) Date of filing: 15.09.2009
(51) Int. Cl.: B62J 99/00, B62K 25/20, B62M 7/12

(54) **SPEED SENSOR INSTALLATION STRUCTURE IN A VEHICLE**
STRUKTUR ZUR INSTALLATION EINES GESCHWINDIGKEITSSENSORS IN EINEM FAHRZEUG
STRUCTURE D'INSTALLATION DE CAPTEUR DE VITESSE DANS UN VÉHICULE

(43) Date of publication of application: 25.07.2012
(73) Proprietor: Honda Motor Co., Ltd., Minato-ku Tokyo 107-8556 (JP)
(72) Inventor: MIMURA Masahide, Wako-shi Saitama 351-0193 (JP); NIIZUMA Keiichiro, Wako-shi Saitama 351-0193 (JP)
(74) Representative: Beder, Jens
(86) International application number: PCT/JP2009/066114
(87) International publication number: WO 2011/033614

(56) References cited:
- WO-A1-99/29561
- WO-A1-2009/025214
- JP-A- 2004 001 649
- JP-A- 2005 178 633
- JP-A- 2005 199 850
- JP-A- 2006 143 216
- JP-A- 2008 049 752

## Description

### TECHNICAL FIELD

The present invention relates to a vehicle in which: an axle of a rear wheel is pivotally supported in a rear portion of a swing arm that is swingably supported on a vehicle body frame; power transmission means for transmitting power from a power source to the axle is accommodated in the swing arm; a final gear of a reduction gear train constituting a part of the power transmission means is fixed to the axle; and a pickup forming a vehicle speed sensor together with a detected portion that is provided on the final gear is mounted on the swing arm so as to face the detected portion, the swing arm comprising a swing arm main body and a cover coupled to the swing arm main body, the swing arm main body having the axle pivotally supported thereon and the pickup mounted thereon, and especially relates to an improvement of a vehicle speed sensor arrangement structure.

### BACKGROUND ART

A structure where a reduction gear train having a final gear fixed to an axle of a rear wheel constitutes a portion of power transmission means accommodated in a swing arm so as to transmit power from an internal combustion engine, and a pickup is mounted on the swing arm so as to face teeth on the outer periphery of the final gear from radially outward of the final gear has been disclosed in Patent Document 1.
Patent Document 1: Japanese Patent No. 4067769
Patent Document 2: PCT WO 99/29561 according to the preamble of claim 1.

### DISCLOSURE OF THE INVENTION

### PROBLEMS TO BE SOLVED BY THE INVENTION

In the structure disclosed in Patent Document 1 described above, however, the pickup is mounted on a rear portion of the swing arm so as to extend in the radial direction of the final gear. In a case in which the pickup projects outward from the swing arm, it is necessary to provide a protective cover for covering the pickup. Also, in a case in which the pickup is arranged inside the swing arm, it is necessary to ensure a space for the pickup in the longitudinal direction of the swing arm. Thus, the swing arm is extended in the longitudinal direction.

The present invention has been made in view of such circumstances, and it is an object thereof to provide a vehicle speed sensor arrangement structure in a vehicle capable of reducing the size of a swing arm by preventing an increase in a length in a front-and-rear direction of the swing arm even when a pickup is arranged in the swing arm.

### MEANS TO SOLVE THE PROBLEMS

In order to achieve the above object, according to a first feature of the present invention, there is provided a vehicle speed sensor arrangement structure in a vehicle in which: an axle of a rear wheel adjacent to one side of a rear portion is pivotally supported in the rear portion of a swing arm that is swingably supported on a vehicle body frame; power transmission means for transmitting power from a power source to the axle is accommodated in the swing arm; a final gear of a reduction gear train constituting a part of the power transmission means is fixed to the axle; and a pickup forming a vehicle speed sensor together with a detected portion that is provided on the final gear is mounted on the swing arm, the pickup being disposed so as to face the detected portion, the swing arm comprising a swing arm main body having the axle pivotally supported thereon, a gear case coupled to the swing arm main body from the rear wheel side and covering the reduction gear train, and a cover coupled to the swing arm main body from the side opposite to the rear wheel and covering the power transmission means, the swing arm main body having the pickup mounted thereon, characterized in that the detected portion is provided on one of opposite axial end surfaces of the final gear, and the pickup is mounted on the swing arm main body from the outside of the vehicle body, an outer end portion of the pickup is covered by the cover, so as to extend parallel to an axis of the axle, a conducting wire connected to the pickup being wired within the swing arm between the swing arm main body and the cover.

According to a second feature of the present invention, in addition to the first feature, a large portion of the pickup is located at a position overlapping the final gear on a projection view onto a plane perpendicular to the axis of the axle.

According to a third feature of the present invention, in addition to the first feature, the pickup is mounted on the swing arm main body so as to partly project outward from the swing arm main body, and a pickup covering portion for covering a projecting portion of the pickup from the swing arm main body is provided on a cover.

According to a fourth feature of the present invention, in addition to the third feature, a mounting seat for the pickup is formed on a swing arm main body, at a position inward from a coupling surface of the cover with the swing arm main body.

According to a fifth feature of the present invention, in addition to any one of the first to fourth features, the power transmission means comprises the reduction gear train interposed between the electric motor as the power source and the axle, and a centrifugal clutch interposed between the electric motor and the reduction gear train.

According to a sixth feature of the present invention, in addition to any one of the first to fifth features, the pickup is mounted on the swing arm at a substantially same position as a coupling portion of a rear cushion unit provided between the vehicle body frame and the swing arm with the swing arm in a vehicle width direction. Further, according to a seventh feature of the present invention, in addition to any one of the first to sixth features, the power source is an electric motor mounted on the swing arm main body and covered by the cover. Furthermore, according to an eighth feature of the present invention, in addition to the fifth or seventh feature, the pickup is disposed closer to the rear of the vehicle than the electric motor, and the conducting wire passes beneath the electric motor and extends toward the front thereof within the swing arm.

Here, an electric motor 23 of embodiments corresponds to the motor of the present invention.

### EFFECTS OF THE INVENTION

According to the first feature of the present invention, the detected portion is provided on one of the opposite axial end surfaces of the final gear, and the pickup facing the detected portion is mounted on the swing arm so as to extend parallel to the axis of the axle. Accordingly, the swing arm can be reduced in size in the front-and-rear direction by preventing an increase in the length in the front-and-rear direction of the swing arm. Further, since the conducting wire connected to the pickup is wired within the swing arm and the pickup is covered by the cover, it is possible to reliably protect the conducting wire from disturbance, water splashes, etc.

Further, the pickup is provided inside the swing arm. Accordingly, it is not necessary to provide a sealing member which is required when a portion of the pickup projects from the swing arm. Also, the pickup can be made much less vulnerable to disturbance, and a special waterproof structure against water splashes or the like can be made unnecessary.

According to the second feature of the present invention, a large portion of the pickup is located at the position overlapping the final gear on a projection view onto a plane perpendicular to the axis of the axle. Accordingly, the swing arm can be prevented from increasing in size when the pickup is mounted thereon.

According to the third feature of the present invention, a projecting portion of the pickup from the swing arm main body is covered by the pickup covering portion provided on the cover that constitutes a part of the swing arm. Accordingly, disturbance and water splashes on the pickup can be prevented.

According to the fourth feature of the present invention, the mounting seat for the pickup is formed on the swing arm main body at a position inward from the coupling surface of the cover having the pickup covering portion with the swing arm main body. The pickup is thereby prevented from projecting from the coupling surface, so that the pickup covering portion can be formed in a simple shape.

According to the fifth feature of the present invention, power from the electric motor is transmitted to the axle of the rear wheel via the centrifugal clutch and the reduction gear train. Thus, even when the centrifugal clutch is in a disengaged state, the pickup detects the detected portion provided on the final gear of the reduction gear train. Accordingly, a rotational speed of the rear wheel, that is, a vehicle speed can be detected at all times.

According to the sixth feature of the present invention, the pickup is mounted on the swing arm at substantially the same position as the coupling portion of the rear cushion unit with the swing arm in the vehicle width direction. Accordingly, the pickup can be mounted on a rigid portion of the swing arm.

### BRIEF DESCRIPTION OF THE DRAWINGS

[FIG. 1] FIG. 1 is a side view of an electric two-wheeled vehicle of Embodiment 1. (Embodiment 1)
[FIG. 2] FIG. 2 is a side view of the electric two-wheeled vehicle with a vehicle body cover being omitted. (Embodiment 1)
[FIG. 3] FIG. 3 is a plan view of a swing arm. (Embodiment 1)
[FIG. 4] FIG. 4 is a view along arrow directions of a line 4-4 in FIG. 3. (Embodiment 1)
[FIG. 5] FIG. 5 is a sectional view along arrow directions of a line 5-5 in FIG. 4. (Embodiment 1)
[FIG. 6] FIG. 6 is a sectional view corresponding to FIG. 5 according to Embodiment 2. (Embodiment 2)

### DESCRIPTION OF REFERENCE NUMERALS AND SYMBOLS

21 ... Axle
22A, 22B ... Swing arm
23 ... Electric motor serving as a power source
33 ... Rear cushion unit
73B ... Cover
77 ... Power transmission means
78 ... Reduction gear train
79 ... Centrifugal clutch
108 ... Detected portion
109 ... Pickup
110 ... Vehicle speed sensor
112 ... Conducting wire
116 ... Pickup covering portion
118 ... Coupling surface
119 ... Mounting seat
F ... Vehicle body frame
WR ... Rear wheel

### BEST MODE FOR CARRYING OUT THE INVENTION

Modes for carrying out the preset invention will be described below with reference to the attached drawings.

### EMBODIMENT 1

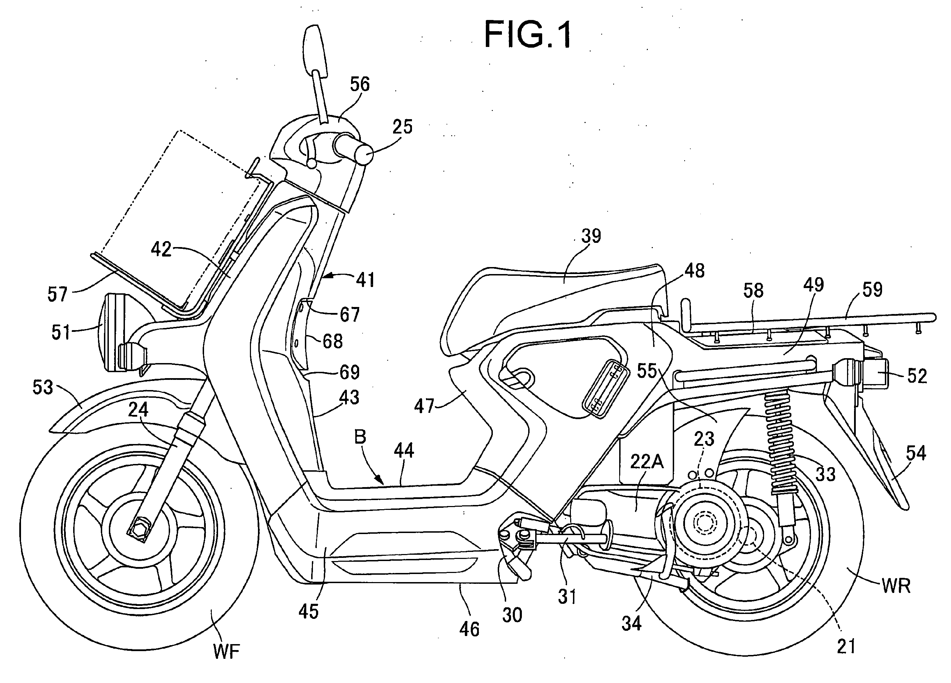

Embodiment 1 of the present invention will be described by referring to FIG. 1 to FIG. 5. Firstly, in FIG. 1, this electric two-wheeled vehicle is a scooter-type electric two-wheeled vehicle having a low deck floor 44, and is formed so that rotative power exerted by an electric motor 23 serving as a power source and disposed inside a swing arm 22A pivotally supporting with a rear portion thereof an axle 21 of a rear wheel WR can rotationally drive the rear wheel WR.

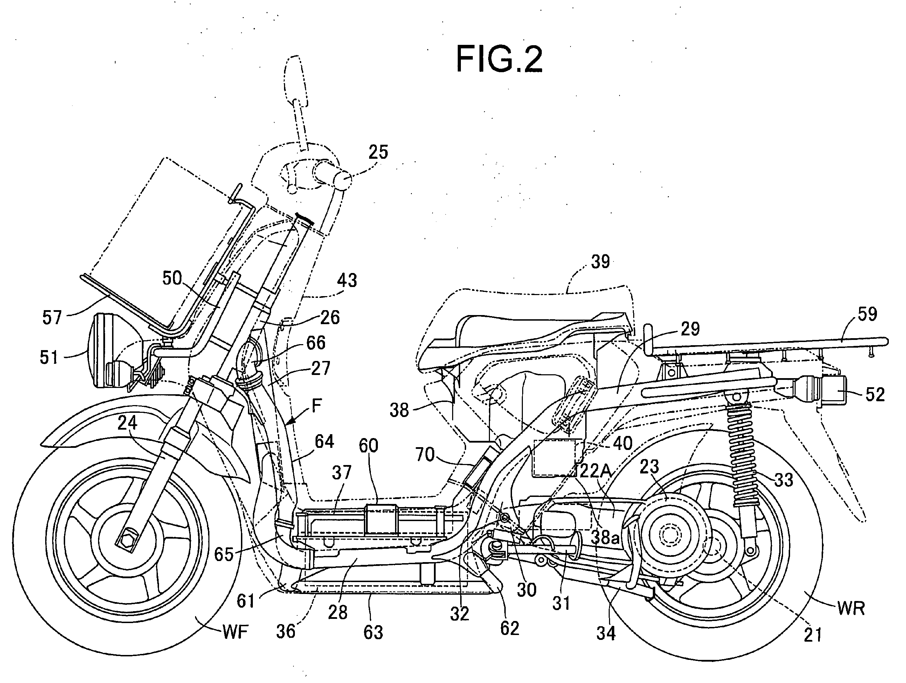

In FIG. 2, a vehicle body frame F of this electric two-wheeled vehicle has: a head pipe 26 which supports in a steerable manner a front fork 24 pivotally supporting a front wheel WF and a steering handle 25 connected to an upper portion of the front fork 24; a down frame 27 which extends from the head pipe 26 rearwardly and downwardly; a pair of left and right under flames 28··· which are connected to a lower portion of the down frame 27 and extend rearwardly; and a pair of left and right rear frames 29··· which integrally continue to a rear end of these under frames 28··· and extend rearwardly and upwardly.

To pivot plates 30··· which are provided in a front portion of both of the rear frames 29··· of the vehicle body frame F, a side stand 31 for maintaining a vehicle body B to be in a standing state with a leftward inclination is attached in a rotatable manner, and a front portion of the swing arm 22A is supported in a swingable manner with a support shaft 32 therebetween. A rear cushion unit 33 is provided between a rear portion of the left rear frame 29 of the left and right rear frames 29··· and a rear portion of the swing arm 22A. Further, a main stand 34 is attached to a front portion of the swing arm 22A in a rotatable manner.

A battery case 37 having therein a high-voltage battery 36 of, for example, 72V, which supplies electric power to the electric motor 23, is arranged between both of the under frames 28··· in such a manner as to be supported by both of the under frames 28···. A storage box 38 which is arranged above the swing arm 22A as seen in a side view is arranged between both of the rear frames 29··· in such a manner as to be supported by both of the rear frames 29···, and this storage box 38 is covered from above by a riding seat 39 which is openable and closable. In addition, at a rear lower portion of the storage box 38, a battery storage part 38a storing a low-voltage battery 40 which supplies electric power at a low voltage of, for example, 12 V, to accessories, such as a front light 51, a tail light 52, and a control unit (not shown in the drawing), is integrally formed in such a manner as to project downwardly.

The vehicle body frame F is covered by a vehicle body cover 41 made of a synthetic resin, the vehicle body cover 41 forming the vehicle body B together with the vehicle body frame F. The vehicle body cover 41 includes: a front cover 42 which covers the head pipe 26 from the front; a leg shield 43 which continues to the front cover 42 in such a manner as to cover, from the front, legs of a rider sitting on the riding seat 39; the low deck floor 44 which continues to a lower portion of the leg shield 43 so as to allow the legs of the rider sitting on the riding seat 39 to be placed thereon, and covers the battery case 28 from above; a pair of left and right floor side covers 45··· which are suspended from both sides of the low deck floor 44, respectively, in such a way as to cover both of the under frames 28··· from both sides; an under cover 46 which connects between lower edges of the respective left and right floor side covers 45; an under-seat front portion cover 47 which arises from a rear end of the low deck floor 44 in such a manner as to cover below the riding seat 39 from the front; a pair of left and right side covers 48··· which continue to both sides of the under-seat front portion cover 47, respectively, in such a manner as to cover below the riding seat 39 from the both sides; and a rear cover 49 which continues to both of the side covers 48··· in such a manner as to cover the rear wheel WR from above. The battery case 37 is covered by, of the vehicle body cover 41, the low deck floor 44, the floor side covers 45 ···, the under cover 46, the under-seat front portion cover 47, and the side covers 48···.

The front light 51 is disposed at a front end of the front cover 42 in such a manner as to be supported by a stay 50 fixed to the head pipe 26, while the tail light 52 is attached to the rear frames 29 ···. A front fender 53 which covers the front wheel WF from above is attached to the front fork 24, a rear fender 54 which covers the rear wheel WR from rearward obliquely above is connected to the rear cover 49, and a fender 55 which covers the rear wheel WR from frontward obliquely above is attached to a front portion of the swing arm 22A. A middle portion of the steering handle 25 is covered by a handle cover 56. A front carrier 57 which is arranged in front of the front cover 42 is supported by the stay 50. A rear carrier 58 is arranged behind the riding seat 39 above the rear cover 49 in such a manner as to be supported by the rear frames 29···.

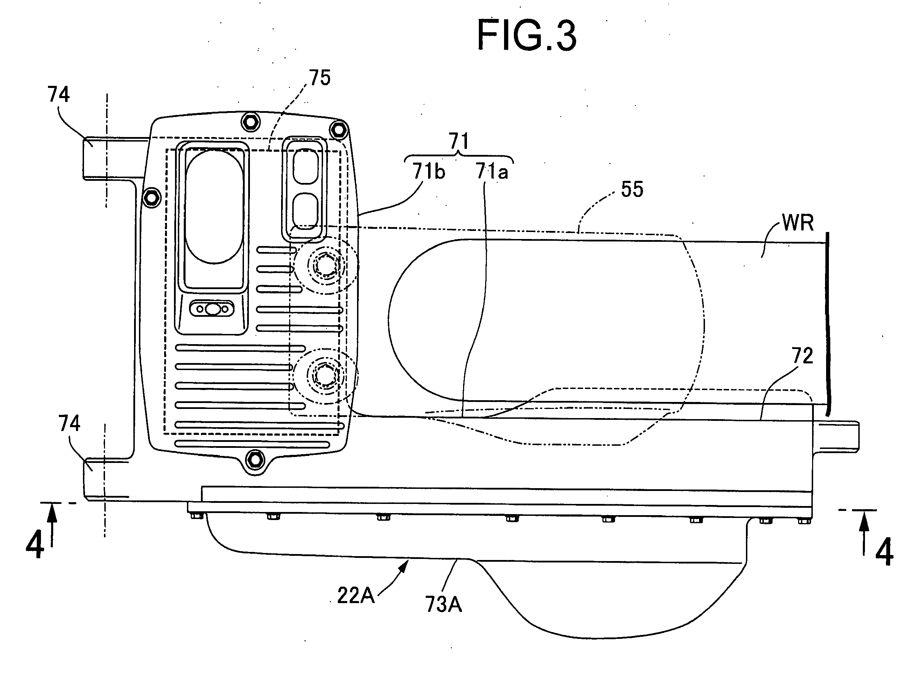

In FIG. 3, the swing arm 22A includes: a swing arm main body 71 having an arm portion 71a that extends in the front-and-rear direction on the left side of the rear wheel WR and a storage box portion 71b connected to the front end of the arm portion 71a so as to be located in front of the rear wheel WR; a gear case 72 coupled to a rear portion of the arm portion 71 a from the rear wheel WR side; and a cover 73A coupled to the swing arm main body 71 from the left side (the outer side). Support projecting portions 74 and 74 are provided projecting from the front end opposite sides of the cover main body 71. The support projecting portions 74 and 74 are respectively pivotably supported on both of the pivot plates 30··· of the vehicle body frame F. A power unit drive 75 is further accommodated in the storage box portion 71b of the swing arm main body 71. The power drive unit 75 converts direct current supplied from the high-voltage battery 36 to alternating current and supplies the alternating current to the electric motor 23. A coupling projecting portion 76 is provided integrally with the rear portion of the arm portion 71a of the swing arm main body 71. The coupling projecting portion 76 projects backward so as to couple the rear portion of the arm portion 71a with a lower end portion of the rear cushion unit 33.

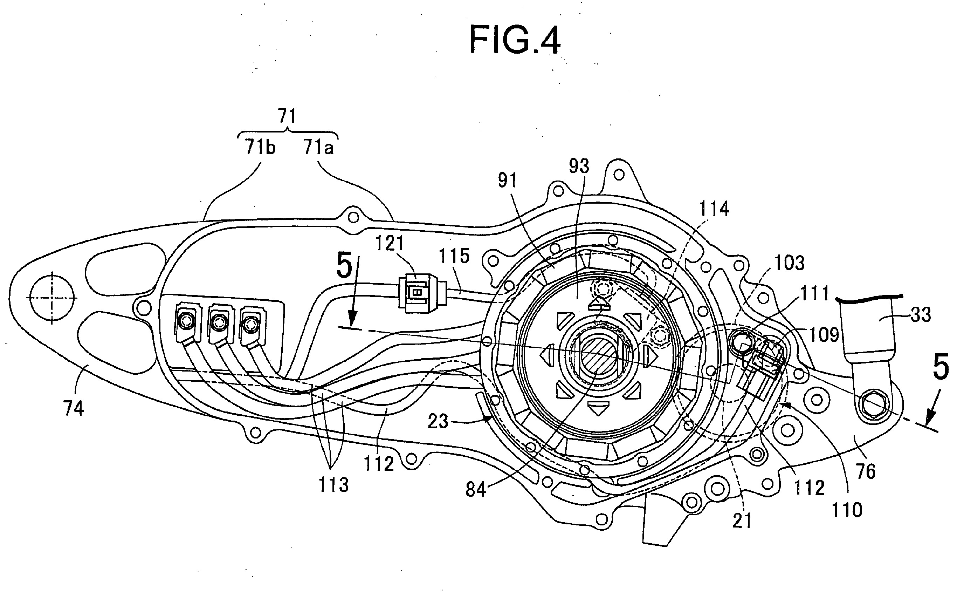

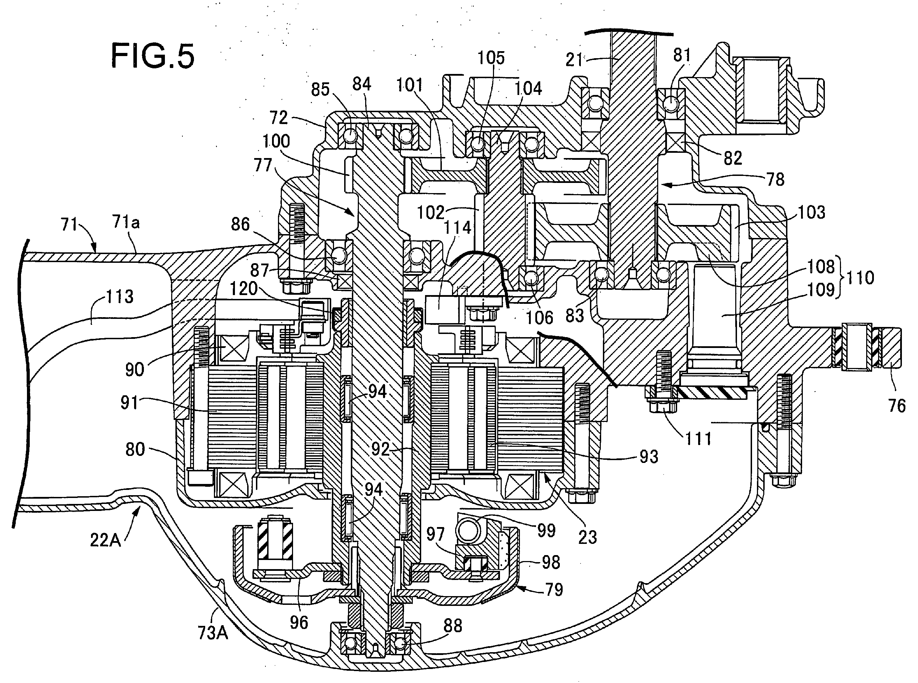

In FIGS. 4 and 5, the axle 21 of the rear wheel WR is pivotally supported in a rear portion of the swing arm 22A. The electric motor 23 and power transmission means 77 are accommodated in the rear portion of the swing arm 22A. The power transmission means 77 transmits power from the electric motor 23 to the axle 21. The power transmission means 77 includes a reduction gear train 78 interposed between the electric motor 23 and the axle 21, and a centrifugal clutch 79 interposed between the electric motor 23 and the reduction gear train 78. The centrifugal clutch 79 is selectively engaged and disengaged so as to block power transmission when a vehicle starts moving.

The electric motor 23 is accommodated between the rear portion of the arm portion 71a of the swing arm main body 71 in the swing arm 22A and a motor cover 80. The motor cover 80 is located inward from the cover 73A and coupled to the rear portion of the arm portion 71a. The reduction gear train 78 is accommodated between the rear portion of the arm portion 71a and the gear case 72. The centrifugal clutch 79 is accommodated in the rear portion of the arm portion 71 a between the motor cover 80 and the cover 73A.

The axle 21 of the rear wheel WR rotatably penetrates a rear portion of the gear case 72. A ball bearing 81 and an annular sealing member 82 located inward from the ball bearing 81 are interposed between the axle 21 and the gear case 72. The axle 21 is rotatably supported on the rear portion of the arm portion 71a via a ball bearing 83.

A transmission shaft 84 having an axis parallel to the axle 21 is disposed rotatably through the arm portion 71a in front of the axle 21. A ball bearing 85 is interposed between one end portion of the transmission shaft 84 and the gear case 72. A ball bearing 86 and an annular sealing member 87 are interposed between an intermediate portion of the transmission shaft 84 and the arm portion 71a. A ball bearing 88 is interposed between the other end portion of the transmission shaft 84 and the cover 73A.

The electric motor 23 includes a stator 91 having a stator coil 90 and fixed to the arm portion 71 a, and a rotor 93 fixed to a cylindrical motor shaft 92 that coaxially surrounds the transmission shaft 84 and coaxially disposed within the stator 91. The electric motor is of an inner-rotor type. Needle bearings 94··· are interposed between the motor shaft 92 and the axle 21.

The centrifugal clutch 79 includes a drive plate 96 fixed to the motor shaft 92, centrifugal weights 97··· supported at a plurality of positions of the drive plate 96, a bowl-shaped clutch outer 98 capable of bringing the centrifugal weights 97··· into friction engagement, and clutch springs 99··· provided between the respective centrifugal weights 97··· and the drive plate 96. The clutch outer 98 is fixed to the transmission shaft 60.

In the centrifugal clutch 79, when a centrifugal force acting on each of the centrifugal weights 97··· during the rotation of the motor shaft 92 and the drive plate 96 exceeds a spring urging force of each of the clutch springs 99···, the centrifugal weights 97··· are brought into friction engagement with the inner periphery of the clutch outer 98. Accordingly, the motor shaft 92 and the transmission shaft 84 are brought into a power transmission state.

The reduction gear train 78 include a pinion 100 provided integrally with the transmission shaft 84, a first idle gear 101 meshing with the pinion 100, a second idle gear 102 rotating together with the first idle gear 101, and a final gear 103 fixed to the axle 21 of the rear wheel WR and meshing with the second idle gear 102.

The first idle gear 101 is fixed to an idle shaft 104 having an axis parallel to the axle 21 and the transmission shaft 84. The second idle gear 102 is provided integrally with the idle shaft 104. A ball bearing 105 is interposed between one end portion of the idle shaft 104 and the gear case 72. A ball bearing 106 is interposed between the other end portion of the idle shaft 104 and the arm portion 71a.

The final gear 103 includes a detected portion 108. A pickup 109 constitutes a vehicle speed sensor 110 together with the detected portion 108. The pickup 109 is mounted on the rear portion of the arm portion 71 a of the swing arm main body 71 in the swing arm 22A so as to face the detected portion 108. Furthermore, the pickup 109 is mounted on the arm portion 71 a at substantially the same position as a coupling portion of the rear cushion unit 33 with the swing arm 22A in the vehicle width direction, that is, at substantially the same position as the coupling projecting portion 76 provided in the rear portion of the arm portion 71 a in the vehicle width direction.

Meanwhile, the detected portion 108 is provided at a plurality of positions at equal intervals in the circumferential direction on one of the opposite axial end surfaces of the final gear 103, that is, on an end surface on the side opposite from the rear wheel WR in Embodiment 1. The pickup 109 extending parallel to the axis of the axle 21 is mounted on the arm portion 71 a with a bolt 111 so as to face the detected portions 108. The cover 73A is mounted on the swing arm main body 71 so as to cover an outer end portion of the pickup 109 mounted on the arm portion 71a from the outside of the vehicle body. Accordingly, the pickup 109 is mounted on the swing arm 22A so as to be located inside the swing arm 22A. A conducting wire 112 connected to the pickup 109 is also wired within the swing arm 22A. Further, the conducting wire 112 passes beneath the electric motor 23 from the pickup 109 disposed at the rear of the electric motor 23 and extends toward the front thereof within the swing arm 22A as shown in Fig. 4.

Furthermore, a large portion of the pickup 109 is located at a position overlapping the final gear 103 on a projection view onto a plane perpendicular to the axis of the axle 21 as shown in FIG. 4.

A rotor sensor 114 is mounted on the stator 91 of the electric motor 23. Detected portions 120··· are provided at a plurality of positions at equal intervals in the circumferential direction of the motor shaft 92 so as to be detected by the rotor sensor 114. The detected portions 120··· are made of a magnetic material such as a magnet.

Three conducting wires 113··· are connected to the stator coil 90 of the stator 91. A conducting wire 115 is connected to the rotor sensor 114. The conducting wires 113 and 115 extend toward the power drive unit 75 within the swing arm 22A. The conducting wire 115 can be selectively coupled and uncoupled by a coupler 121 in an intermediate portion thereof.

Next, the operation of Embodiment 1 will be described. The detected portions 108 are provided on one of the opposite axial end surfaces of the final gear 103 of the reduction gear train 78 (the end surface on the side opposite from the rear wheel WR in Embodiment 1). The pickup 109 constituting the vehicle speed sensor 110 together with the detected portions 108 is mounted on the swing arm 22A so as to face the detected portions 108 by extending parallel to the axis of the axle 21 of the rear wheel WR. Accordingly, the swing arm 22A can be reduced in size in the front-and-rear direction by preventing an increase in a length in the front-and-rear direction of the swing arm 22A.

The pickup 109 is mounted on the swing arm 22A within the swing arm 22A, and the conducting wire 112 connected to the pickup 109 is wired within the swing arm 22A. Accordingly, it is not necessary to provide a sealing member which is required when a portion of the pickup 109 projects from the swing arm 22A. Also, the pickup 109 can be made less vulnerable to disturbance, and a special waterproof structure against water splashes or the like can be made unnecessary.

The large portion of the pickup 109 is located at a position overlapping the final gear 103 on a projection view onto a plane perpendicular to the axis 21 of the rear wheel WR axle. Thus, the swing arm 22A can be prevented from increasing in size when the pickup 109 is mounted thereon.

Furthermore, the power transmission means 77 includes the reduction gear train 78 interposed between the electric motor 23 and the axle 21 of the rear wheel WR, and the centrifugal clutch 79 interposed between the electric motor 23 and the reduction gear train 78. The detected portions 108 provided on the final gear 103 of the reduction gear train 78 are detected by the pickup 109. Thus, even when the centrifugal clutch 79 is in a disengaged state, the rotational speed of the rear wheel WR, that is, the vehicle speed can be detected at all times.

Moreover, the pickup 109 is mounted on the swing arm 22A at substantially the same position as the coupling portion of the rear cushion unit 33, which is provided between the vehicle body frame F and the swing arm 22A, with the swing arm 22A in the vehicle width direction. Thus, the pickup 109 can be mounted on a rigid portion of the swing arm 22A.

### EMBODIMENT 2

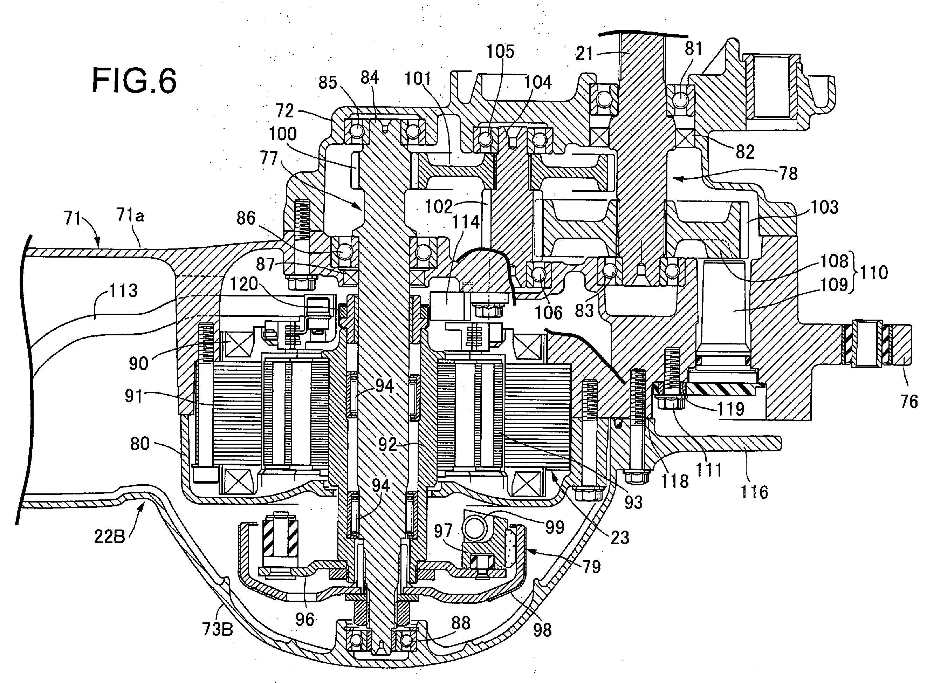

Embodiment 2 of the present invention will be described by reference to FIG. 6. Portions corresponding to those in Embodiment 1 described above are assigned the same reference numerals to show the portions only in the drawing and omit the detailed description thereof.

A swing arm 22B includes a swing arm main body 71, a gear case 72 coupled to a rear portion of an arm portion 71 a of the swing arm main body 71 from a rear wheel WR side (see Embodiment 1), and a cover 73B coupled to the swing arm main body 71 from the left side (the outer side). An axle 21 of the rear wheel WR is pivotally supported in a rear portion of the swing arm 22B. An electric motor 23 and power transmission means 77 including a reduction gear train 78 and a centrifugal clutch 79 are also accommodated in the rear portion of the swing arm 22B.

Detected portions 108 are provided at a plurality of positions at equal intervals in the circumferential direction on one of the opposite axial end surfaces of a final gear 103 of the reduction gear train 78, that is, on the end surface on the side opposite from the rear wheel WR in Embodiment 2. A pickup 109 forming a vehicle speed sensor 110 together with the detected portions 108 is mounted on an arm main portion 21a of the swing arm 22B so as to face the detected portions 108.

The pickup 109 is mounted on an arm main portion 91a with a bolt 111 so as to partly project outward from the arm main portion 91a. A pickup covering portion 116 is provided on the cover 73B constituting a part of the swing arm 22B. The pickup covering portion 116 covers a projecting portion of the pickup 109 from the swing arm 22B.

A mounting seat 119 for the pickup 109 is formed on the swing arm main body 71 at a position inward from a coupling surface 118 of the cover 73B having the pickup covering portion 116 with the swing arm main body 71.

According to Embodiment 2, even when the pickup 109 partly projects from the swing arm 22B, the projecting portion of the pickup 109 from the swing arm 22B is covered by the pickup covering portion 116 provided on the cover 73B that constitutes a portion of the swing arm 22B. Accordingly, disturbance and water splashes on the pickup 109 can be prevented.

Also, the mounting seat 119 for the pickup 109 is formed on the swing arm main body 71 at a position inward from the coupling surface 118 of the cover 73B with the swing arm main body 71. The pickup 109 is thereby prevented from projecting from the coupling surface 118. Accordingly, the pickup covering portion 116 can be formed in a simple shape.

For example, the present invention has been described in relation to an electric two-wheeled vehicle where the electric motor 23 is used as a power source in the above-described embodiments. However, the present invention may be also carried out in a two-wheeled motor vehicle or a three-wheeled motor vehicle where an internal combustion engine is used as a power source.

## Claims

1. A vehicle speed sensor arrangement structure in a vehicle in which: an axle (21) of a rear wheel (WR) adjacent to one side of a rear portion is pivotally supported in the rear portion of a swing arm (22A, 22B) that is swingably supported on a vehicle body frame (F); power transmission means (77) for transmitting power from a power source (23) to the axle (21) is accommodated in the swing arm (22A, 22B); a final gear (103) of a reduction gear train (78) constituting a part of the power transmission means (77) is fixed to the axle (21); and a pickup (109) forming a vehicle speed sensor (110) together with a detected portion (108) that is provided on the final gear (103) is mounted on the swing arm (22A, 22B), the pickup (109) being disposed so as to face the detected portion (108), the swing arm (22A, 22B) comprising a swing arm main body (71) having the axle (21) pivotally supported thereon, a gear case (72) coupled to the swing arm main body (71) from the rear wheel (WR) side and covering the reduction gear train (78), and a cover (73A, 73B) coupled to the swing arm main body (71) from the side opposite to the rear wheel (WR) and covering the power transmission means (77), the swing arm main body (71) having the pickup (109) mounted thereon, **characterized in that** the detected portion (108) is provided on one of opposite axial end surfaces of the final gear (103), and the pickup (109) is mounted on the swing arm main body (71) from the outside of the vehicle body, an outer end portion of the pickup (109) is covered by the cover (73A, 73B, so as to the extend parallel to an axis of the axle (21), a conducting wire (112) connected to the pickup (109) being wired within the swing arm (22A, 22B) between the swing arm main body (71) and the cover (73A, 73B).

2. The vehicle speed sensor arrangement structure in the vehicle according to claim 1, wherein a large portion of the pickup (109) is located at a position overlapping the final gear (103) on a projection view onto a plane perpendicular to the axis of the axle (21).

3. The vehicle speed sensor arrangement structure in the vehicle according to claim 1, wherein the pickup (109) is mounted on the swing arm main body (71) so as to partly project outward from the swing arm main body (71), and a pickup covering portion (116) for covering a projection portion of the pickup (109) from the swing arm main body (71) is provided on a cover (73B).

4. The vehicle speed sensor arrangement structure in the vehicle according to claim 3, wherein a mounting seat (119) for the pickup (109) is formed on a swing arm main body (71), at a position inward from a coupling surface (118) of the cover (73B) with the swing arm main body (71).

5. The vehicle speed sensor arrangement structure in the vehicle according to any one of the claims 1 and 2 to 4, wherein the power transmission means (77) comprises the reduction gear train (78) interposed between the electric motor (23) as the power source and the axle (21), and a centrifugal clutch (79) interposed between the electric motor (23) and the reduction gear train (78).

6. The vehicle speed sensor arrangement structure in the vehicle according to any one of the claims 1 and 2 - 5, wherein the pickup (109) is mounted on the swing arm (22A, 22B) at a substantially same position as a coupling portion of a rear cushion unit (33) provided between the vehicle body frame (F) and the swing arm (22A, 22B) with the swing arm (22A, 22B) in a vehicle width direction.

7. The vehicle speed sensor arrangement structure in the vehicle according to claim 5 or 6, wherein the pickup (109) is disposed closer to the rear of the vehicle than the electric motor (23), and the conducting wire (112) passes beneath the electric motor (23) and extends toward the front thereof within the swing arm (22A, 22B).

## Patentansprüche

1. Fahrzeuggeschwindigkeitssensor-Anordnungskonstruktion in einem Fahrzeug, in dem:
eine Achse (21) eines hinteren Rades (WR), das benachbart zu einer Seite eines hinteren Abschnitts ist, drehbar in dem hinteren Abschnitt eines Schwenkarms (22A, 22B) aufgehängt ist, der schwingbar an einer Fahrzeugkarosserie (F) gestützt ist; Leistungsübertragungsmittel (77) zum Übertragen von Leistung von einer Leistungsquelle (23) zu der Achse (21), wobei die Leistungsübertragungsmittel (77) in dem Schwenkarm (22A, 22B) aufgenommen sind; ein letztes Zahnrad (103) eines Untersetzungsgetriebezugs (78), der einen Teil der Leistungsübertragungsmittel (77) bildet, an der Achse (21) fixiert ist; und einen Aufnehmer (109), der einen Fahrzeuggeschwindigkeitssensor (110) zusammen mit einem erkannten Abschnitt (108), der an dem letzten Zahnrad (103) vorgesehen ist, an dem Schwenkarm (22A, 22B) montiert ist, wobei der Aufnehmer (109) so angeordnet ist, dass er dem erkannten Abschnitt (108) gegenüberliegt, der Schwenkarm (22A, 22B) einen Schwenkarmhauptkörper (71) umfasst, der die Achse (21) daran drehbar gestützt hält, ein Getriebegehäuse (72), das mit dem Schwenkarmhauptkörper (71) von der Seite des hinteren Rades (WR) verbunden ist und den Untersetzungsgetriebezug (78) abdeckt, und eine Abdeckung (73A, 73B), die mit dem Schwenkarmhauptkörper (71) von der Seite, die von dem hinteren Rad (WR) abgewandt ist, verbunden ist und die die Leistungsübertragungsmittel (77) abdeckt, wobei der Schwenkarmhauptkörper (71) den Aufnehmer (109) daran montiert hat, **dadurch gekennzeichnet, dass** der erkannte Abschnitt (108) auf einer der gegenüberliegenden achsialen Endflächen des letzten Zahnrads (103) vorgesehen ist und der Aufnehmer (109) an dem Schwenkarmhauptkörper (71) von der Außenseite der Fahrzeugkarosserie montiert ist, ein äußerer Endabschnitt des Aufnehmers (109) durch die Abdeckung (73A, 73B) abgedeckt ist, so dass sie sich parallel zu einer Achse der Achse (21) erstreckt, ein Stromkabel (112) mit dem Aufnehmer (109) verbunden ist, der in dem Schwenkarm (22A, 22B) zwischen dem Schwenkarmhauptkörper (71) und der Abdeckung (73A, 73B) verkabelt ist.

2. Fahrzeuggeschwindigkeitssensor-Anordnungskonstruktion in dem Fahrzeug gemäß Anspruch 1, wobei ein großer Abschnitt des Aufnehmers (109) an einer Stelle angeordnet ist, die das letzte Zahnrad (103) in einer Projektionsansicht auf eine Ebene, die senkrecht zu der Achse (21) ist, überlappt.

3. Fahrzeuggeschwindigkeitssensor-Anordnungskonstruktion in dem Fahrzeug gemäß Anspruch 1, wobei der Aufnehmer (109) an dem Schwenkarmhauptkörper (71) montiert ist, so dass er teilweise außerhalb des Schwenkarmhauptkörpers (71) hervorsteht und ein Aufnehmerabdeckungsabschnitt (116) zum Abdecken eines vorstehenden Abschnitts des Aufnehmers (109) von dem Schwenkarmhauptkörper (71) an einer Abdeckung (73B) vorgesehen ist.

4. Fahrzeuggeschwindigkeitssensor-Anordnungskonstruktion in dem Fahrzeug gemäß Anspruch 3, wobei ein Montagesitz (119) für den Aufnehmer (109) an einem Schwenkarmhauptkörper (71) ausgebildet ist, an einer Position innerhalb einer Verbindungsfläche (118) der Abdeckung (73B) mit dem Schwenkarmhauptkörper (71).

5. Fahrzeuggeschwindigkeitssensor-Anordnungskonstruktion in dem Fahrzeug gemäß irgendeinem der Ansprüche 1 und 2 bis 4, wobei die Leistungsübertragungsmittel (77) den Übersetzungsgetriebezug (78) umfassen, der zwischen dem elektrischen Motor (23) als Leistungsquelle und der Achse (21) angeordnet ist und eine Fliehkraftkupplung (79), die zwischen dem elektrischen Motor (23) und dem Übersetzungsgetriebezug (78) angeordnet ist.

6. Fahrzeuggeschwindigkeitssensor-Anordnungskonstruktion in dem Fahrzeug gemäß irgendeinem der Ansprüche 1 und 2 bis 5, wobei der Aufnehmer (109) an dem Schwenkarm (22A, 22B) an einer im Wesentlichen identischen Position wie ein Verbindungsabschnitt einer hinteren Dämpfereinheit (33) angeordnet ist, die zwischen dem Fahrzeugrahmen (F) und dem Schwenkarmen (22A, 22B) mit dem Schwenkarm (22A, 22B) in einer Fahrzeugbreitenrichtung vorgesehen ist.

7. Fahrzeuggeschwindigkeitssensor-Anordnungskonstruktion in dem Fahrzeug gemäß Anspruch 5 oder 6, wobei der Aufnehmer (109) näher hinten am Fahrzeug angeordnet ist als der elektrische Motor (23) und das Stromkabel (112) unterhalb des elektrischen Motors (23) verläuft und sich auf die Front zu innerhalb des Schwenkarms (22A, 22B) erstreckt.

## Revendications

1. Structure d'agencement de capteur de vitesse de véhicule dans un véhicule dans laquelle : un essieu (21) d'une roue arrière (WR) adjacente à un côté d'une partie arrière est supporté de manière à pouvoir pivoter dans la partie arrière d'un bras oscillant (22A, 22B) qui est supporté de manière à pouvoir osciller sur un châssis de carrosserie de véhicule (F) ; un moyen de transmission de puissance (77) pour transmettre de la puissance provenant d'une source de puissance (23) à l'essieu (21) est logé dans le bras oscillant (22A, 22B) ; un pignon final (103) d'un train d'engrenages réducteur (78) constituant une partie du moyen de transmission de puissance (77) est fixé à l'essieu (21) ; et un détecteur (109) formant un capteur de vitesse de véhicule (110) conjointement avec une partie détectée (108) qui est agencée sur le pignon final (103) est monté sur le bras oscillant (22A, 22B), le détecteur (109) étant disposé de sorte à faire face à la partie détectée (108), le bras oscillant (22A, 22B) comprenant un corps principal de bras oscillant (71) ayant l'essieu (21) supporté de manière à pouvoir pivoter dessus, un carter d'engrenage (72) couplé au corps principal de bras oscillant (71) depuis le côté roue arrière (WR) et recouvrant le train d'engrenages réducteur (78), et un couvercle (73A, 73B) couplé au corps principal de bras oscillant (71) depuis le côté opposé à la roue arrière (WR) et recouvrant le moyen de transmission de puissance (77), le corps principal de bras oscillant (71) ayant le détecteur (77) monté dessus,
**caractérisée en ce que** la partie détectée (108) est agencée sur l'une des surfaces d'extrémité axiale opposées du pignon final (103), et le détecteur (109) est monté sur le corps principal de bras oscillant (71) depuis l'extérieur de la carrosserie de véhicule, une partie d'extrémité externe du détecteur (109) est recouverte par le couvercle (73A, 73B) de sorte à s'étendre de façon parallèle à un axe de l'essieu (21), un fil conducteur (112) raccordé au détecteur (109) étant branché dans le bras oscillant (22A, 22B) entre le corps principal de bras oscillant (71) et le couvercle (73A, 73B).

2. Structure d'agencement de capteur de vitesse de véhicule dans le véhicule selon la revendication 1, dans laquelle une grande partie du détecteur (109) est placée à une position qui chevauche le pignon final (103) sur une vue en projection sur un plan perpendiculaire à l'axe de l'essieu (21).

3. Structure d'agencement de capteur de vitesse de véhicule dans le véhicule selon la revendication 1, dans laquelle le détecteur (109) est monté sur le corps principal de bras oscillant (71) de sorte à faire partiellement saillie vers l'extérieur depuis le corps principal de bras oscillant (71), et une partie de recouvrement de détecteur (116) pour recouvrir une partie en saillie du détecteur (109) depuis le corps principal de bras oscillant (71) est agencée sur un couvercle (73B).

4. Structure d'agencement de capteur de vitesse de véhicule dans le véhicule selon la revendication 3, dans laquelle un siège de montage (119) pour le détecteur (109) est formé sur un corps principal de bras oscillant (71), à une position vers l'intérieur d'une surface de couplage (118) du couvercle (73B) avec le corps principal de bras oscillant (71).

5. Structure d'agencement de capteur de vitesse de véhicule dans le véhicule selon l'une quelconque des revendications 1 et 2 à 4, dans laquelle le moyen de transmission de puissance (77) comprend le train d'engrenages réducteur (78) intercalé entre le moteur électrique (23) en tant que source de puissance et l'essieu (21), et un embrayage centrifuge (79) intercalé entre le moteur électrique (23) et le train d'engrenages réducteur (78).

6. Structure d'agencement de capteur de vitesse de véhicule dans le véhicule selon l'une quelconque des revendications 1 et 2 à 5, dans laquelle le détecteur (109) est monté sur le bras oscillant (22A, 22B) à une position sensiblement identique à celle d'une partie de couplage d'un appareil amortisseur arrière (33) agencé entre le châssis de carrosserie de véhicule (F) et le bras oscillant (22A, 22B), le bras oscillant (22A, 22B) se trouvant dans le sens de la largeur du véhicule.

7. Structure d'agencement de capteur de vitesse de véhicule dans le véhicule selon la revendication 5 ou 6, dans laquelle le détecteur (109) est disposé plus près de l'arrière du véhicule que le moteur électrique (23), et le fil conducteur (112) passe sous le moteur électrique (23) et s'étend vers l'avant de celui-ci dans le bras oscillant (22A, 22B).
